# EUROPEAN PATENT SPECIFICATION

(11) **EP 4 092 361 B1**
(45) Date of publication and mention of the grant of the patent: **13.08.2025**
(21) Application number: 20913831.2
(22) Date of filing: 16.01.2020
(51) Int. Cl.: F25B 49/02, F25B 1/00, B60H 1/00, F24F 11/36

(54) **AIR CONDITIONING DEVICE FOR VEHICLE**
KLIMATISIERUNGSVORRICHTUNG FÜR FAHRZEUG
DISPOSITIF DE CLIMATISATION POUR VÉHICULE

(43) Date of publication of application: 23.11.2022
(73) Proprietor: MITSUBISHI ELECTRIC CORPORATION, Chiyoda-ku Tokyo 100-8310 (JP)
(72) Inventor: SHINGU Wahei, Tokyo 100-8310 (JP)
(74) Representative: Studio Torta S.p.A.
(86) International application number: PCT/JP2020/001227
(87) International publication number: WO 2021/144907

(56) References cited:
- WO-A1-00/59748
- WO-A1-00/59748
- FR-A1- 3 063 246
- JP-A- 2004 196 063
- JP-A- 2004 196 063
- JP-A- 2008 094 340
- JP-A- 2008 094 340
- JP-A- H 085 597
- JP-A- H 085 597
- JP-A- S62 138 654
- JP-A- S62 138 654

## Description

### Technical Field

The present invention relates to an air conditioning apparatus for a vehicle.

### Background Art

As disclosed in Patent Literature 1, an air conditioning apparatus for a vehicle is known that performs air conditioning of a vehicular compartment by a refrigeration cycle device that employs carbon dioxide as a refrigerant. The refrigeration cycle device includes an indoor heat exchanger that performs heat exchange between the refrigerant and air of the vehicular compartment.

Additionally, the air conditioning apparatus for a vehicle includes (i) an indoor fan that forms airflow passing through the indoor heat exchanger, (ii) a gas sensor that detects a concentration of carbon dioxide gas at a position located downstream of the indoor heat exchanger with respect to a direction in which the airflow flows, and (iii) a control device that determines, by using a result of the detection by the gas sensor, whether leakage of the refrigerant from the indoor exchanger is occurring.

### Citation List

### Patent Literature

Patent Literature 1: International Publication No. WO 00/59748
Patent Literature 2 : WO0059748
Patent Literature 3 : FR3063246
Patent Literature 4 : JP2004196063
Patent Literature 5: JPs62138654
Patent Literature 6 : JP2008094340
Patent Literature 7 : JPh085597

### Summary of Invention

### Technical Problem

According to the configuration of the aforementioned air conditioning apparatus for a vehicle, the airflow after passage through the indoor heat exchanger directly hits the gas sensor. This is a factor that leads to a decrease in accuracy of the detection by the gas sensor.

An objective of the present invention is to provide an air conditioning apparatus, for a vehicle, that enables high-accuracy detection of the concentration of carbon dioxide gas due to leakage of refrigerant.

### Solution to Problem

To achieve the aforementioned objective, an air conditioning apparatus for a vehicle according to the present invention includes all the features of claim 1.

### Advantageous Effects of Invention

According to the aforementioned configuration, the windbreak plate can prevent the airflow from hitting the sensing portion, allowing the first gas sensor to accurately detect the concentration of the carbon dioxide gas due to leakage of the refrigerant.

### Brief Description of Drawings

FIG. 1 is a schematic diagram illustrating a part of configuration of an air conditioning apparatus for a railroad vehicle according to Embodiment 1;
FIG. 2 is a plan view illustrating an interior of a casing according to Embodiment 1;
FIG. 3 is an external perspective view of a first gas sensor according to Embodiment 1;
FIG. 4 is a schematic diagram illustrating a positional relationship between the first gas sensor and a first indoor fan according to Embodiment 1;
FIG. 5 is a schematic diagram illustrating configuration of a first gas sensor according to Embodiment 2;
FIG. 6 is a flowchart of refrigerant leakage monitor processing according to Embodiment 3;
FIG. 7 is a flowchart of emergency control according to Embodiment 3;
FIG. 8 is a flowchart of emergency control according to Embodiment 4;
FIG. 9 is a plan view illustrating an interior of a casing according to Embodiment 5;
FIG. 10 is a flowchart of refrigerant leakage monitor processing according to Embodiment 5;
FIG. 11 is a flowchart of refrigerant leakage monitor processing according to Embodiment 6; and
FIG. 12 is a schematic diagram illustrating a part of configuration of an air conditioning apparatus for a railroad vehicle according to Embodiment 7.

### Description of Embodiments

Hereinafter, air conditioning apparatuses for a railroad vehicle according to Embodiments 1-7, in which the vehicle is a railroad vehicle, are described with reference to the drawings. In the drawings, components that are the same or equivalent are assigned the same reference sign.

### Embodiment 1

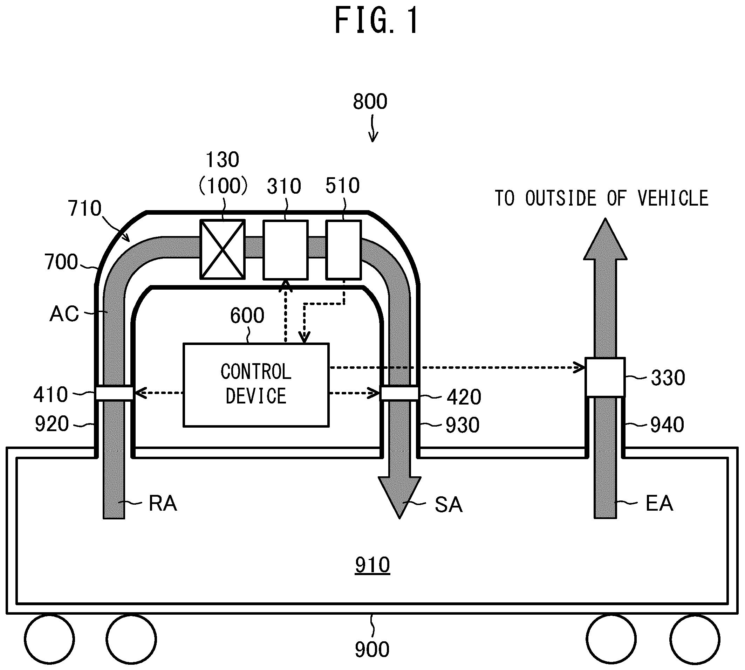

FIG. 1 is a schematic diagram illustrating a part of configuration of an air conditioning apparatus 800 for a railroad vehicle according to the present embodiment. The air conditioning apparatus 800 for the railroad vehicle performs air conditioning of a passenger compartment 910 that is a vehicular compartment defined in a railroad vehicle 900 for human occupancy.

The air conditioning apparatus 800 for the railroad vehicle includes an indoor heat exchanger 130 having an interior for flow therethrough of a refrigerant containing carbon dioxide that is hereinafter referred to as the "carbon dioxide refrigerant". The indoor heat exchanger 130 is a part of a refrigeration cycle device 100 that provides a refrigeration cycle by using the carbon dioxide refrigerant.

A refrigerant that contains carbon dioxide as main component, more specifically, a refrigerant corresponding to the refrigerant number "R-744" and having 99.9 % or more carbon dioxide purity, is preferable as the carbon dioxide refrigerant, from the viewpoint of non-combustibility and a low global warming potential.

Furthermore, the air conditioning apparatus 800 for the railroad vehicle includes a casing 700 that defines an indoor chamber 710 that is a space in which the indoor heat exchanger 130 is arranged. The indoor chamber 710 communicates with the passenger compartment 910.

Furthermore, the air conditioning apparatus 800 for the railroad vehicle includes an indoor fan 310 arranged in the indoor chamber 710. The indoor fan 310 forms airflow AC by air flowing from the passenger compartment 910 into the indoor chamber 710, passing through the indoor heat exchanger 130, and flowing out to return to the passenger compartment 910.

Hereinafter, air that is included in the airflow AC and flows from the passenger compartment 910 into the indoor chamber 710 to the indoor heat exchanger 130 is called the return air RA. Additionally, air that flows out from the indoor chamber 710 to the passenger compartment 910 after passage through the indoor heat exchanger 130 is called the supply air SA.

The return air RA passes through a return duct 920 that is a duct communicating with the passenger compartment 910, and flows into the indoor chamber 710. The supply air SA passes through a supply duct 930 that is an additional duct communicating with the passenger compartment 910, and flows out from the indoor chamber 710 to the passenger compartment 910.

Furthermore, the air conditioning apparatus 800 for the railroad vehicle includes (i) a return damper 410 that is a damper arranged at a boundary portion between the return duct 920 and the indoor chamber 710 and (ii) a supply damper 420 that is a damper arranged at a boundary portion between the supply duct 930 and the indoor chamber 710.

The return damper 410 is switchable between (i) an open state in which inflow of air forming the airflow AC, that is, the return air RA, from the passenger compartment 910 into the indoor chamber 710, is allowed, and (ii) a closed state in which the inflow is prevented. The return damper 410 in the open state can adjust a flow rate of the return air RA.

The supply damper 420 is switchable between (i) an open state in which outflow of the airflow AC from the indoor chamber 710 to the passenger compartment 910 is allowed and (ii) a closed state in which the outflow is prevented. The supply damper 420 in the open state can adjust a flow rate of the supply air SA.

Furthermore, the air conditioning apparatus 800 for the railroad vehicle includes an exhaust fan 330 that exhausts air of the passenger compartment 910 to an outside of the vehicle. This "outside of the vehicle" indicates an exterior of the railroad vehicle 900 and the casing 700.

Hereinafter, air that is exhausted by the exhaust fan 330 from the passenger compartment 910 to the outside of the vehicle is called the exhaust air EA. The exhaust air EA is exhausted to the outside of the vehicle through an exhaust duct 940 that is a duct communicating with the passenger compartment 910. The exhaust duct 940 is a duct that is arranged independently of the return duct 920 and the supply duct 930.

For easy understanding of functions of the air conditioning apparatus 800 for the railroad vehicle, FIG. 1 illustrates positions and extension directions of the return duct 920, the supply duct 930, the exhaust duct 940, and the casing 700 that are different from actual positions and extension directions thereof. The casing 700 may be arranged on a roof of the railroad vehicle 900 or may be arranged under a floor of the railroad vehicle 900.

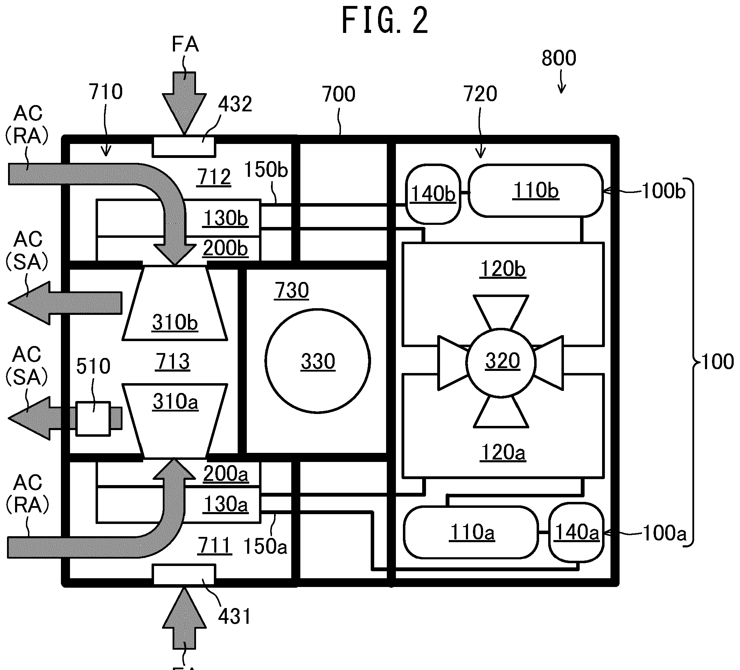

Next, specific arrangement of components in the casing 700 is described with reference to FIG. 2.

As illustrated in FIG. 2, the refrigeration cycle device 100 housed in the casing 700 includes a first refrigeration cycle device 100a that provides a refrigeration cycle and a second refrigeration cycle device 100b that provides a refrigeration cycle independent of the first refrigeration cycle device 100a.

The first refrigeration cycle device 100a includes (i) a first compressor 110a that compresses the carbon dioxide refrigerant, (ii) a first outdoor heat exchanger 120a that condenses the compressed carbon dioxide refrigerant, (iii) a non-illustrated first expander that expands the condensed carbon dioxide refrigerant, (iv) a first indoor heat exchanger 130a that evaporates the expanded carbon dioxide refrigerant, and (v) a first accumulator 140a that separates liquid from the carbon dioxide refrigerant after passage through the first indoor heat exchanger 130a and causes gas to return to the first compressor 110a.

Furthermore, the first refrigeration cycle device 100a includes first refrigerant piping 150a having an interior for flow therethrough of the carbon dioxide refrigerant. The first refrigerant piping 150a provides, by connecting the first compressor 110a, the first outdoor heat exchanger 120a, the first expander, the first indoor heat exchanger 130a, and the first accumulator 140a, a closed loop in which the carbon dioxide refrigerant flows.

The first compressor 110a, the first outdoor heat exchanger 120a, the first expander, the first accumulator 140a, and the first refrigerant piping 150a, are cooperation devices that are included in the first refrigeration cycle device 100a together with the first indoor heat exchanger 130a.

The second refrigeration cycle device 100b includes (i) a second compressor 110b that compresses the carbon dioxide refrigerant, (ii) a second outdoor heat exchanger 120b that condenses the compressed carbon dioxide refrigerant, (iii) a non-illustrated second expander that expands the condensed carbon dioxide refrigerant, (iv) a second indoor heat exchanger 130b that evaporates the expanded carbon dioxide refrigerant, and (v) a second accumulator 140b that separates liquid from the carbon dioxide refrigerant after passage through the second indoor heat exchanger 130b and causes gas to return to the second compressor 110b.

Furthermore, the second refrigeration cycle device 100b includes second refrigerant piping 150b having an interior for flow therethrough of the carbon dioxide refrigerant. The second refrigerant piping 150b provides, by connecting the second compressor 110b, the second outdoor heat exchanger 120b, the second expander, the second indoor heat exchanger 130b, and the second accumulator 140b, a closed loop in which the carbon dioxide refrigerant flows.

The second compressor 110b, the second outdoor heat exchanger 120b, the second expander, the second accumulator 140b, and the second refrigerant piping 150b, are cooperation devices that are included in the second refrigeration cycle device 100b together with the second indoor heat exchanger 130b.

Furthermore, the air conditioning apparatus 800 for the railroad vehicle includes (i) a first indoor fan 310a that facilitates the heat exchange between the first indoor heat exchanger 130a and the air of the passenger compartment 910 illustrated in FIG. 1 and (ii) a second indoor fan 310b that facilitates the heat exchange between the second indoor heat exchanger 130b and the air of the passenger compartment 910 illustrated in FIG. 1.

The first indoor fan 310a forms airflow AC by which a part of the return air RA passes through the first indoor heat exchanger 130a and then returns as the supply air SA to the passenger compartment 910 illustrated in FIG. 1. The second indoor fan 310b forms airflow AC by which the rest of the return air RA passes through the second indoor heat exchanger 130b and then returns as the supply air SA to the passenger compartment 910 illustrated in FIG. 1.

The first indoor fan 310a is arranged at a position located downstream of the first indoor heat exchanger 130a with respect to a flow direction of the airflow AC formed thereby. The second indoor fan 310b is arranged at a position located downstream of the second indoor heat exchanger 130b with respect to a flow direction of the airflow AC formed thereby.

The indoor heat exchanger 130 illustrated in FIG. 1 includes the first indoor heat exchanger 130a and the second indoor heat exchanger 130b. Further, the indoor fan 310 illustrated in FIG. 1 includes the first indoor fan 310a and the second indoor fan 310b. For easy understanding, FIG. 1 illustrates a single airflow AC as the airflow AC formed by the first indoor fan 310a and the airflow AC formed by the second indoor fan 310b.

Furthermore, the air conditioning apparatus 800 for the railroad vehicle includes a first heater 200a arranged in a path of the airflow AC formed by the first indoor fan 310a and a second heater 200b arranged in a path of the airflow AC formed by the second indoor fan 310b.

The first heater 200a is arranged between the first indoor heat exchanger 130a and the first indoor fan 310a. The second heater 200b is arranged between the second indoor heat exchanger 130b and the second indoor fan 310b. Each of the first heater 200a and the second heater 200b heats the return air RA passing therethrough.

Furthermore, the air conditioning apparatus 800 for the railroad vehicle includes an outdoor fan 320 that facilitates the heat exchange between (i) outside air that is air of the outside of the vehicle and (ii) each of the first outdoor heat exchanger 120a and the second outdoor heat exchanger 120b. The outdoor fan 320 forms non-illustrated airflow by passage of the outside air through the first outdoor heat exchanger 120a and the second outdoor heat exchanger 120b and return to the outside of the vehicle.

The casing 700 internally defines, in addition to the indoor chamber 710 illustrated in FIG. 1, (i) an outdoor chamber 720 in which the outdoor fan 320 is arranged and (ii) an exhaust chamber 730 in which the exhaust fan 330 is arranged. The indoor chamber 710, the outdoor chamber 720, and the exhaust chamber 730, are disposed so as to be hermetically sealed with respect to each other.

The first compressor 110a, the second compressor 110b, the first outdoor heat exchanger 120a, the second outdoor heat exchanger 120b, the first accumulator 140a, and the second accumulator 140b, are arranged in the outdoor chamber 720, in addition to the outdoor fan 320.

Furthermore, the indoor chamber 710 is divided into (i) a first return chamber 711 in which the first indoor heat exchanger 130a and the first heater 200a are arranged, (ii) a second return chamber 712 in which the second indoor heat exchanger 130b and the second heater 200b are arranged, and (iii) a supply chamber 713 in which the first indoor fan 310a and the second indoor fan 310b are arranged.

The first return chamber 711 and the supply chamber 713 communicate through the first indoor fan 310a. The second return chamber 712 and the supply chamber 713 communicate through the second indoor fan 310b.

Furthermore, the air conditioning apparatus 800 for the railroad vehicle includes (i) a fresh damper 431 that is a damper arranged in the first return chamber 711 of the indoor chamber 710 at a position through which the airflow AC passes and (ii) a fresh damper 432 that is a damper arranged in the second return chamber 712 of the indoor chamber 710 at a position through which the airflow AC passes.

Each of the fresh dampers 431 and 432 is switchable between (i) an open state in which respective inflow of the outside air into the indoor chamber 710 from the exterior of the casing 700 or from the exterior of the passenger compartment 910 illustrated in FIG. 1 is allowed and (ii) a closed state in which the inflow is prevented. Hereinafter, the outside air taken in respectively through the fresh dampers 431 and 432 is called the fresh air FA. Each of the fresh damper 431 and 432 in the open state can adjust a flow rate of the fresh air FA.

Next, configuration for detecting leakage of the carbon dioxide refrigerant from the refrigeration cycle device 100 is described.

As described above, the carbon dioxide refrigerant is used as refrigerant in the refrigeration cycle device 100. Thus, the air conditioning apparatus 800 for the railroad vehicle according to the present embodiment is configured so as to enable, even in a case of leakage of the carbon dioxide refrigerant from the refrigeration cycle device 100, prompt and accurate detection of the leakage. Hereinafter, this configuration is specifically described.

As illustrated in FIG. 1, in order to detect leakage of the carbon dioxide refrigerant from the refrigeration cycle device 100, the air conditioning apparatus 800 for the railroad vehicle includes a first gas sensor 510 disposed in a path of the airflow AC in the indoor chamber 710. The first gas sensor 510 is configured to detect a concentration of carbon dioxide gas in the path of the airflow AC at a position located downstream of the indoor heat exchanger 130.

Specifically, as illustrated in FIG. 2, the first gas sensor 510 is arranged, in the path of the airflow AC formed by the first indoor fan 310a, at a position located downstream of the first indoor fan 310a. This enables more prompt detection of leakage of the carbon dioxide refrigerant from the refrigeration cycle device 100 than in a case of a configuration in which the first gas sensor 510 is arranged at a position located upstream of the first indoor fan 310a and the first indoor heat exchanger 130a.

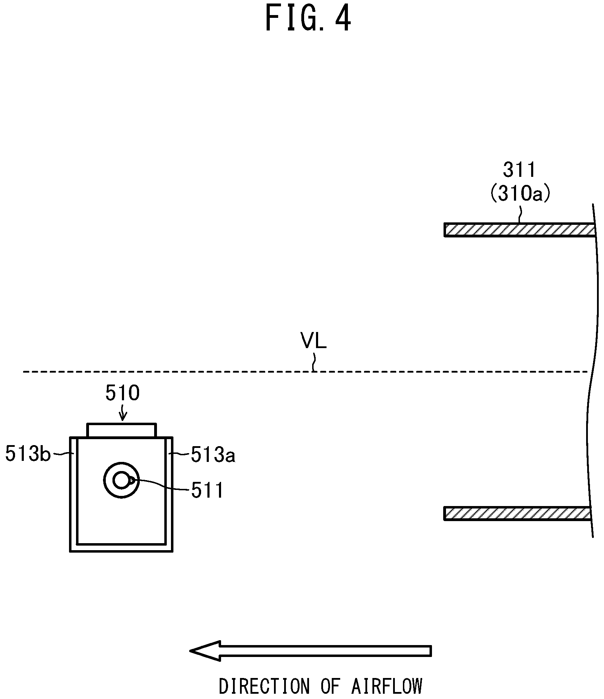

Specifically, the first gas sensor 510 is arranged in the supply chamber 713 at a position facing the first indoor fan 310a. More specifically, as illustrated in FIG. 4, the first indoor fan 310a has an air outlet 311 configured to discharge the air included in the airflow AC, and the first gas sensor 510 is arranged at a position facing the air outlet 311.

In the case as described above in which the first gas sensor 510 is arranged in the path of the airflow AC, a high wind velocity of the airflow AC that hits the first gas sensor 510 is a factor that leads to a decrease in accuracy of detection by the first gas sensor 510. In particular, the wind velocity of the airflow AC at the position facing the air outlet 311 of the first indoor fan 310a is higher than those of other positions in the path of the airflow AC. Thus, the first gas sensor 510 according to the present embodiment has a configuration for suppressing a decrease in accuracy of detection by preventing hitting by the airflow AC. Hereinafter, this configuration is specifically described.

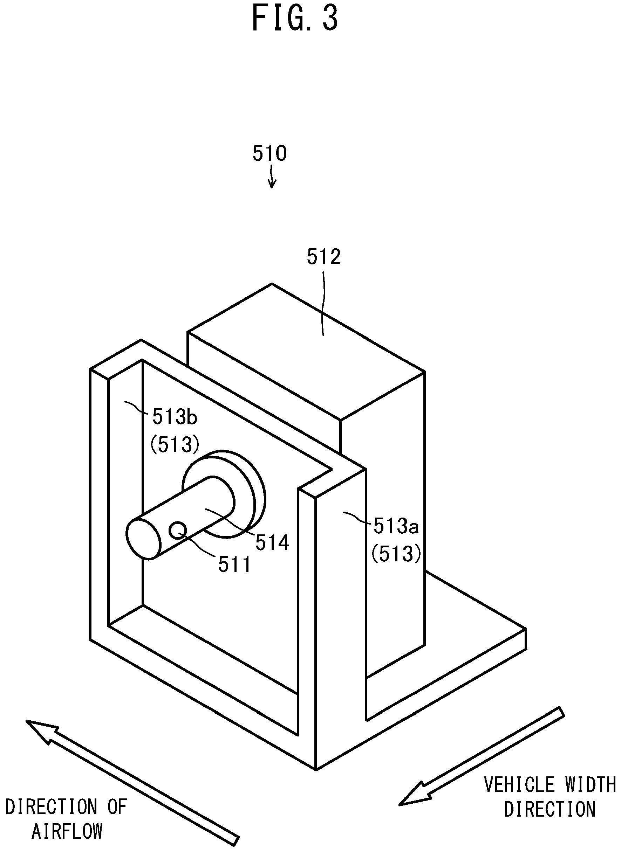

FIG. 3 is an external perspective view of the first gas sensor 510. The first gas sensor 510 includes a sensing portion 511 configured to react in accordance with a concentration of carbon dioxide gas, a main body 512 configured to output a result of detection of the concentration of carbon dioxide gas based on the reaction by the sensing portion 511, and a windbreak plate 513 configured to prevent the airflow AC from hitting the sensing portion 511.

The main body 512 is fixed to the casing 700 illustrated in FIG. 2. Further, the first gas sensor 510 includes a protrusion portion 514 that protrudes from the main body 512 in a vehicle width direction that is an intersection direction intersecting the airflow AC. This "vehicle width direction" indicates a width direction of the railroad vehicle 900 illustrated in FIG. 1. At the position facing the air outlet of the first indoor fan 310a illustrated in FIG. 2, the vehicle width direction is orthogonal to the airflow AC.

The sensing portion 511 is disposed at the protrusion portion 514. That is, the sensing portion 511 is arranged at a position deviated from the main body 512 in a direction orthogonal to the airflow AC. The windbreak plate 513 includes a first windbreak plate 513a and a second windbreak plate 513b that each protrude from the main body 512 in the vehicle width direction. The first windbreak plate 513a and the second windbreak plate 513b face each other in the direction of the airflow AC. The sensing portion 511 is arranged between the first windbreak plate 513a and the second windbreak plate 513b with respect to the direction of the airflow AC.

The first windbreak plate 513a that is a windbreak plate located upstream side among the first windbreak plate 513a and the second windbreak plate 513b with respect to a flow of the airflow AC is arranged between the sensing portion 511 and the first indoor fan 310a illustrated in FIG. 2. Due to such configuration, the first windbreak plate 513a prevents the airflow AC from hitting the sensing portion 511. This leads to a decrease in the wind velocity of the airflow AC hitting the sensing portion 511 and also leads to appropriate stirring of the airflow AC at a position of the sensing portion 511. As a result, accuracy of detection by the first gas sensor 510 is improved.

Furthermore, the second windbreak plate 513b that is a windbreak plate located downstream side among a pair of the first windbreak plate 513a and the second windbreak plate 513b with respect to the flow of the airflow AC also serves for the appropriate stirring of the airflow AC at the position of the sensing portion 511 and thus contributes to the improvement in the accuracy of detection by the first gas sensor 510. However, the second windbreak plate 513b may be omitted.

A positional relationship between the first gas sensor 510 and the first indoor fan 310a with respect to a vertical direction is described with reference to FIG. 4. The virtual line VL of FIG. 4 indicates a central position of the air outlet 311 of the first indoor fan 310a in the vertical direction. The first gas sensor 510 is arranged below the virtual line VL. That is, the sensing portion 511 of the first gas sensor 510 is arranged below the central position of the air outlet 311 in the vertical direction.

Since carbon dioxide gas is heavier than air, in a case in which the airflow AC includes carbon dioxide gas due to leakage of the carbon dioxide refrigerant, this carbon dioxide gas tries to move downward. Accordingly, arranging the sensing portion 511 below the central position of the air outlet 311 in the vertical direction enables directing a large portion of the carbon dioxide gas in the air flow AC toward the sensing portion 511. This allows the first gas sensor 510 to accurately detect a concentration of carbon dioxide gas.

Again with reference to FIG. 1, the air conditioning apparatus 800 for the railroad vehicle includes a control device 600 configured to make, by using the result of detection by the first gas sensor 510, determination of whether leakage of the carbon dioxide refrigerant from the refrigeration cycle device 100 is occurring that is hereinafter referred to as the refrigerant leakage determination. The control device 600, in the case of determining that leakage of the carbon dioxide refrigerant is occurring, performs at least one of emergency control for suppressing an increase in concentration of the carbon dioxide gas in the passenger compartment 910 or alert control for issuing an alert indicating the occurrence of the leakage of the carbon dioxide refrigerant.

As described above, according to the present embodiment, the first windbreak plate 513a prevents the airflow AC from hitting the sensing portion 511, allowing the first gas sensor 510 to accurately detect a concentration of carbon dioxide gas due to leakage of the carbon dioxide refrigerant. In comparison to conventional techniques, this enables more improvement in accuracy of the refrigerant leakage determination made by the control device 600.

### Embodiment 2

Hereinafter, a preferable modified example of configuration of the first gas sensor 510 is described.

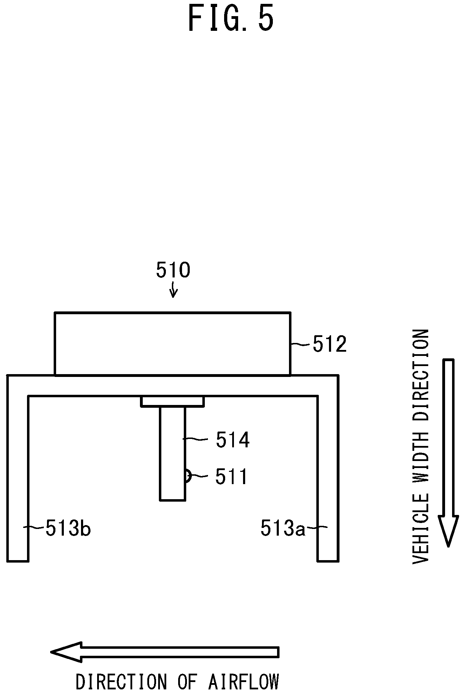

As illustrated in FIG. 5, in a first gas sensor 510 according to the present embodiment, the first windbreak plate 513a protrudes in the vehicle width direction with respect to the protrusion portion 514. Due to such configuration, the first windbreak plate 513a prevents the airflow AC from directly hitting the sensing portion 511. This enables further improvement in accuracy of detection by the first gas sensor 510.

Furthermore, the second windbreak plate 513b also protrudes in the vehicle width direction with respect to the protrusion portion 514. Due to this, the pair of the first windbreak plate 513a and the second windbreak plate 513b causes stirring of the airflow AC at the position of the sensing portion 511. This configuration also contributes to the improvement in the accuracy of detection by the first gas sensor 510. However, the second windbreak plate 513b may be omitted, as described above.

### Embodiment 3

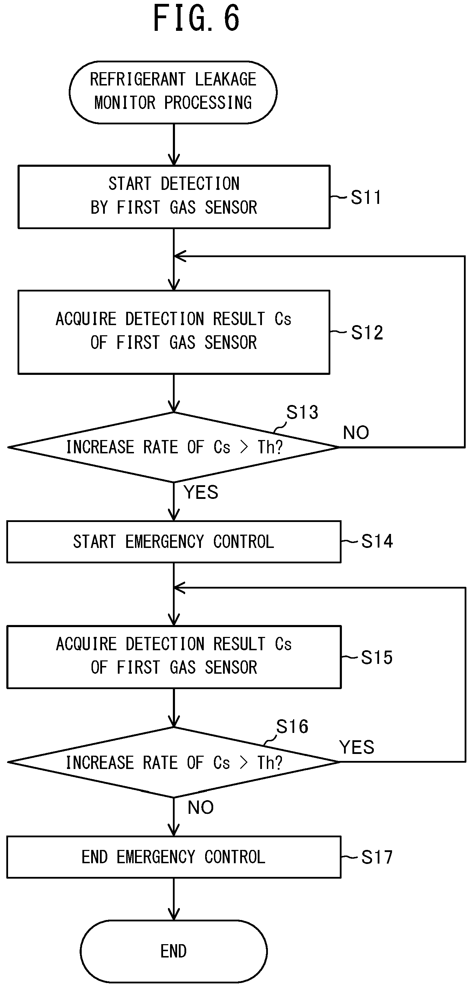

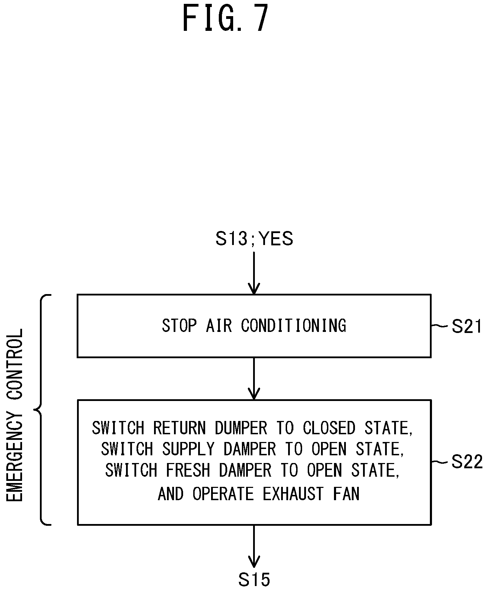

Hereinafter, a specific example of operations by the control device 600 illustrated in FIG. 1 is described. The control device 600 executes refrigerant leakage monitor processing in which the aforementioned refrigerant leakage determination is repeatedly made in real time. Hereinafter, the refrigerant leakage monitor processing is described with reference to FIGS. 6 and 7.

As illustrated in FIG. 6, the control device 600 firstly causes the first gas sensor 510 to start detection of the concentration of carbon dioxide gas (step S11). Thereafter, the first gas sensor 510 repeatedly detects the concentration of carbon dioxide gas in real time.

Then the control device 600 acquires a detection result Cs from the first gas sensor 510 (step S12), and compares an increase rate of the detection result Cs and a predetermined threshold Th indicating the occurrence of leakage of the carbon dioxide refrigerant from the refrigeration cycle device 100 (step S13). Although the threshold Th is 10,000 [ppm/h] in the present embodiment, no particular limitation is placed on the threshold Th.

The "increase rate of the detection result Cs" indicates (i) a difference between a value of a current detection result Cs and a value of a preceding detection result Cs or (ii) a physical quantity that is proportional to the difference. The "value of a preceding detection result Cs" means a value of the detection result Cs at a time one sampling period beforehand. An initial value of the detection result Cs is taken to be zero.

When the increase rate of the detection result Cs is equal to or smaller than the threshold Th (NO in step S13), the control device 600 determines that leakage of the carbon dioxide refrigerant from the refrigeration cycle device 100 is not occurring. Then the control device 600 returns to step S12 in order to continue monitoring of whether leakage of the carbon dioxide refrigerant is occurring. The loop of step S12 and step S13 is repeated at every sampling period of detection by the first gas sensor 510.

Conversely, when the increase rate of the detection result Cs exceeds the threshold Th (YES in step S13), the control device 600 determines that leakage of the carbon dioxide refrigerant from the refrigeration cycle device 100 is occurring. Then the control device 600 starts the emergency control for suppressing an increase in concentration of carbon dioxide gas in the passenger compartment 910 (step S14). Hereinafter, the emergency control is specifically described with reference to FIG. 7.

As illustrated in FIG. 7, when air conditioning of the passenger compartment 910 is currently performed, the control device 600 firstly causes stoppage of the air conditioning (step S21). Specifically, the control device 600 causes stoppage of the first compressor 110a and the second compressor 110b that are illustrated in FIG. 2. This stops circulation of the carbon dioxide refrigerant in the refrigeration cycle device 100, enabling suppression of worsening of the leakage of the carbon dioxide refrigerant. Further, the control device 600 also causes stoppage of the first indoor fan 310a, the second indoor fan 310b, and the outdoor fan 320 that are illustrated in FIG. 2.

Then the control device 600 causes the exhaust fan 330 illustrated in FIG. 1 to operate in a state in which the return damper 410 illustrated in FIG. 1 is switched to the closed state and the supply damper 420 illustrated in FIG. 1 and the fresh dampers 431 and 432 illustrated in FIG. 2 are each switched to the open state (step S22).

Causing the exhaust fan 330 to operate leads to exhausting of the exhaust air EA to the outside of the vehicle through the exhaust duct 940, as illustrated in FIG. 1. Since the carbon dioxide gas existing in the passenger compartment 910 is also exhausted as the exhaust air EA, an increase in concentration of carbon dioxide gas in the passenger compartment 910 is suppressed.

Furthermore, the exhaust fan 330 also serves to draw the fresh air FA illustrated in FIG. 2 into the passenger compartment 910. That is, the atmospheric pressure of the passenger compartment 910 decreases due to the exhausting of the exhaust air EA, and due to the decrease in the atmospheric pressure, the fresh air FA illustrated in FIG. 2 flows into the indoor chamber 710 through each of the fresh dampers 431 and 432 and flows into the passenger compartment 910 through the indoor chamber 710 and the supply damper 420 illustrated in FIG. 1. Since the fresh air FA flows into the passenger compartment 910 in the aforementioned manner, the increase in the concentration of carbon dioxide gas in the passenger compartment 910 is suppressed.

Again with reference to FIG. 6, after starting the emergency control as described above (step S14), the control device 600 reacquires the detection result Cs from the first gas sensor 510 (step S15), and determines whether the increase rate of the detection result Cs exceeds the threshold Th (step S16).

When the increase rate of the detection result Cs exceeds the threshold Th (YES in step S16), since leakage of the carbon dioxide refrigerant from the refrigeration cycle device 100 is not yet ended, the control device 600 returns to step S15 in order to continue the emergency control. The loop of step S15 and step S16 is repeated at every sampling period of detection by the first gas sensor 510.

Conversely, when the increase rate of the detection result Cs is equal to or smaller than the threshold Th (NO in step S16), since the leakage of the carbon dioxide refrigerant from the refrigeration cycle device 100 can be deemed to be ended, the control device 600 ends the emergency control (step S17).

Specifically, the control device 600 switches the supply damper 420 illustrated in FIG. 1 to the closed state and causes the exhaust fan 330 illustrated in FIG. 1 to stop. The return damper 410 illustrated in FIG. 1 may be switched to the open state, although maintaining in the closed state is preferable in order to disconnect the indoor chamber 710 and the passenger compartment 910. Further, each of the fresh dampers 431 and 432 that are illustrated in FIG. 2 may be switched to the closed state, although maintaining in the open state is preferable.

Thereafter, the refrigerant leakage monitor processing ends. The control device 600 does not restart the air conditioning until completion of repair of the refrigeration cycle device 100.

### Embodiment 4

Although the emergency control according to aforementioned Embodiment 3 includes causing the fresh air FA to flow into the passenger compartment through the fresh dampers 431 and 432, the fresh dampers 431 and 432 need not be switched to the open state by the emergency control. Hereinafter, a specific example of such configuration is described.

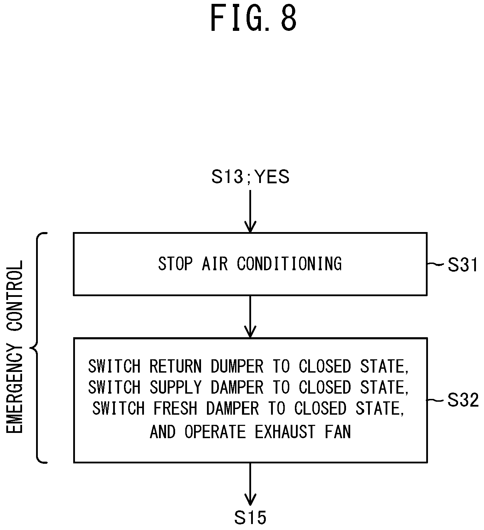

FIG. 8 is a flowchart of emergency control according to the present embodiment. In the present embodiment, the control device 600 causes stoppage of the air conditioning (step S31), and then causes the exhaust fan 330 illustrated in FIG. 1 to operate in a state in which all of the return damper 410 and the supply damper 420 that are illustrated in FIG. 1 and the fresh dampers 431 and 432 illustrated in FIG. 2 are switched to the closed state (step S32).

Switching the return damper 410 and the supply damper 420 to the closed state cuts off the communication between the indoor chamber 710 and the passenger compartment 910. Further, since the fresh dampers 431 and 432 are switched to the closed state, a flow of air from the indoor chamber 710 to the vehicle chamber 910 is less likely to be formed even upon a decrease in air pressure of the passenger compartment 910 that is caused by the exhaust fan 330.

This configuration enables prevention of the carbon dioxide refrigerant leaked from the refrigeration cycle device 100 from flowing out from the indoor chamber 710 to the passenger compartment 910. Accordingly, an increase in the concentration of carbon dioxide gas in the passenger compartment 910 is suppressed.

In a case in which a non-illustrated intake duct leading to the exterior is disposed in the passenger compartment 910, the outside air flows into the passenger compartment 910 through this intake duct. In a case in which a non-illustrated window leading to the exterior is disposed in the passenger compartment 910, the outside air flows into the passenger compartment 910 through this window. In a case in which a non-illustrated entrance-exit door through which passengers get on and get off is arranged for the passenger compartment 910, the outside air flows into the passenger compartment 910 through this entrance-exit door upon arrival of the railroad vehicle 900 at a station. Due to this, the concentration of carbon dioxide gas in the passenger compartment 910 is reduced.

### Embodiment 5

In aforementioned Embodiments 1-4, examples of configuration are described in which the determination of whether leakage of the carbon dioxide refrigerant is occurring is made by using the result of the detection by the first gas sensor 510. A second gas sensor may further be arranged at a position located upstream of the indoor heat exchanger 130 with respect to the flow direction of the airflow AC, and the determination of whether leakage of the carbon dioxide refrigerant is occurring may be made by using the a result of detection by the first gas sensor 510 and a result of detection by the second gas sensor. Hereinafter, a specific example of such configuration is described.

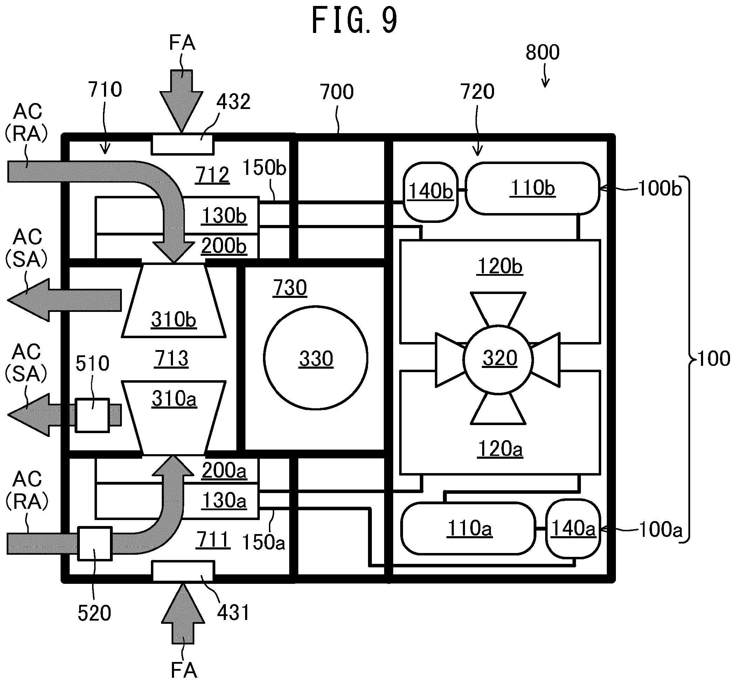

As illustrated in FIG. 9, an air conditioning apparatus 800 for a railroad vehicle according to the present embodiment includes, in addition to the first gas sensor 510, a second gas sensor 520 arranged in the first return chamber 711.

The second gas sensor 520 is configured to detect a concentration of carbon dioxide gas, in the path of the airflow AC formed by the first indoor fan 310a, at a position located upstream of the first indoor heat exchanger 130a. The second gas sensor 520 has a configuration that is the same as that of the first gas sensor 510 illustrated in FIG. 3 or FIG. 5.

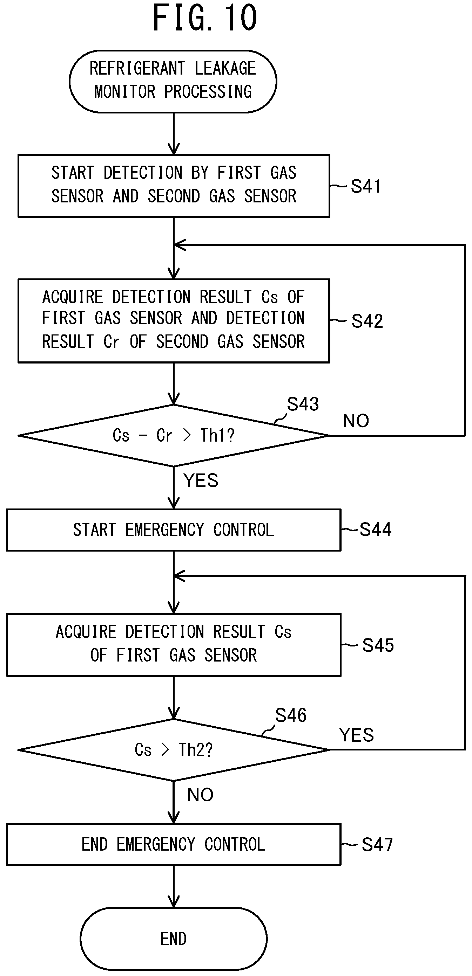

In the present embodiment, the control device 600 illustrated in FIG. 1 executes, by using a result of detection by the first gas sensor 510 and a result of detection by the second gas sensor 520, the refrigerant leakage monitor processing in which the aforementioned refrigerant leakage determination is repeatedly made in real time. Hereinafter, a specific example is described with reference to FIG. 10.

As illustrated in FIG. 10, the control device 600 firstly causes the first gas sensor 510 and the second gas sensor 520 to start detection of the concentration of carbon dioxide gas (step S41). Thereafter, each of the first gas sensor 510 and the second gas sensor 520 repeatedly detects the concentration of carbon dioxide gas in real time at a corresponding position.

The sampling period of detection by the first gas sensor 510 and the second gas sensor 520 is preferably equal to or less than fifteen seconds, more preferably equal to or less than ten seconds, and still more preferably equal to or less than three seconds.

Then the control device 600 acquires a detection result Cs from the first gas sensor 510 and acquires a detection result Cr from the second gas sensor 520 (step S42),

Then the control device 600 subtracts the detection result Cr of the second gas sensor 520 from the detection result Cs of the first gas sensor 510, and determines, by comparing a value of Cs - Cr that is a result of the subtraction and a predetermined first threshold Th1, whether leakage of the carbon dioxide refrigerant from the refrigeration cycle device 100 is occurring (step S43).

The control device 600 acquires each of the detection result Cs of the first gas sensor 510 and the detection result Cr of the second gas sensor 520 in real time, and calculates a difference between the detection results Cs and Cr that are detected at the same time.

Hereinafter, the reason is described as to why leakage of the carbon dioxide refrigerant is detectable by the value of Cs - Cr that is a difference between the detection result Cs of the first gas sensor 510 and the detection result Cr of the second gas sensor 520.

In FIG. 9, in the case in which leakage of the carbon dioxide refrigerant from the refrigeration cycle device 100 is not occurring, no factor that causes an increase in concentration of carbon dioxide gas exists between the second gas sensor 520 and the first gas sensor 510 in the path of the airflow AC formed by the first indoor fan 310a. Due to this, the detection result Cs of the first gas sensor 510 and the detection result Cr of the second gas sensor 520 indicate the same value or indicate close values. Accordingly, the difference Cs - Cr becomes zero or a small value.

Conversely, in the case of occurrence of leakage of the carbon dioxide refrigerant from the refrigeration cycle device 100, in particular, from the first indoor heat exchanger 130a or the first refrigerant piping 150a, the detection result Cs of the first gas sensor 510 further contains a concentration of carbon dioxide gas that is derived from the leaked carbon dioxide refrigerant. On the other hand, at a time immediately after the occurrence of the leakage, the concentration of carbon dioxide gas that is derived from the leaked carbon dioxide refrigerant is not yet reflected in the detection result Cr of the second gas sensor 520 disposed at the position located upstream of the first indoor heat exchanger 130a and the first refrigerant piping 150a. Accordingly, the difference Cs - Cr becomes a large value.

Thus, the control device 600 can detect leakage of the carbon dioxide refrigerant by comparing the value of the difference Cs - Cr with the first threshold Th1 that indicates an increase in concentration of carbon dioxide gas in air included in the airflow AC due to the leakage of the carbon dioxide refrigerant.

Again with reference to FIG. 10, when the value of the difference Cs - Cr is equal to or smaller than the first threshold Th1 (NO in step S43), since the detection result Cs of the first gas sensor 510 and the detection result Cr of the second gas sensor 520 indicate the same value or indicate close values, the control device 600 determines that leakage of the carbon dioxide refrigerant from the refrigeration cycle device 100 is not occurring.

Then the control device 600 returns to step S42 in order to continue monitoring of whether leakage of the carbon dioxide refrigerant is occurring. The loop of step S42 and step S43 is repeated at every sampling period of detection by the first gas sensor 510 and detection by the second gas sensor 520.

Conversely, when the value of the difference Cs - Cr exceeds the first threshold Th1 (YES in step S43), since this indicates that the detection result Cs of the first gas sensor 510 contains a concentration of carbon dioxide gas that is derived from the carbon dioxide refrigerant, the control device 600 determines that leakage of the carbon dioxide refrigerant from the refrigeration cycle device 100 is occurring.

Thus, the control device 600 starts the emergency control for suppressing an increase in concentration of carbon dioxide gas in the passenger compartment 910 (step S44). Specific content of this emergency control is the same as that indicated in FIG. 7 or that indicated in FIG. 8.

Then the control device 600 acquires the detection result Cs from the first gas sensor 510 (step S45) and compares the detection result Cs of the first gas sensor 510 and a predetermined second threshold Th2 (step S46). The second threshold Th2 is a value that is sufficiently small as to allow the leakage of the carbon dioxide refrigerant from the refrigeration cycle device 100 to be considered to be ended.

That is, step S46 indicates a determination that is hereinafter referred to as the end determination and is a determination of whether to end the emergency control. As described above, after starting the emergency control, the control device 600 makes the end determination by using, among the detection result Cs of the first gas sensor 510 and the detection result Cr of the second gas sensor 520, only the detection result Cs of the first gas sensor 510.

This is because, at a time of the end determination in step S46, the return damper 410 is in a state of being switched to the closed state, and therefore almost no airflow AC is formed around the second gas sensor 520, and the detection result Cr of the second gas sensor 520 is unlikely to change even after ending of leakage of the carbon dioxide refrigerant. On the other hand, since the fresh air FA passed through the indoor heat exchanger 130 flows through the position of the first gas sensor 510, whether leakage of the carbon dioxide refrigerant is ended is detectable by using the detection result Cs of the first gas sensor 510.

When the detection result Cs of the first gas sensor 510 exceeds the second threshold Th2 (YES in step S46), since the leakage of the carbon dioxide refrigerant from the refrigeration cycle device 100 is not yet ended, the control device 600 returns to step S45 in order to continue the emergency control. The loop of step S45 and step S46 is repeated at every sampling period of detection by the first gas sensor 510.

Conversely, when the detection result Cs of the first gas sensor 510 is equal to or smaller than the second threshold Th2 (NO in step S46), since the leakage of the carbon dioxide refrigerant from the refrigeration cycle device 100 can be deemed to be ended, the control device 600 ends the emergency control (step S47).

According to the embodiment described above, the effects below are obtainable.

In the case in which leakage of the carbon dioxide refrigerant from the refrigeration cycle device 100 is not occurring, the detection result Cs of the first gas sensor 510 and the detection result Cr of the second gas sensor 520 indicate the same value or indicate close values, and in contrast, in the case of occurrence of leakage of the carbon dioxide refrigerant from the refrigeration cycle device 100, the detection result Cs of the first gas sensor 510 at the time of the occurrence of the leakage becomes larger than the detection result Cr of the second gas sensor 520 at the time of the occurrence of the leakage. Due to this, the control device 600 can accurately detect leakage of carbon dioxide gas by using the value of the difference Cs - Cr.

Furthermore, in step S43, the control device 600 can cancel out from the detection result Cs of the first gas sensor 510 the concentration of carbon dioxide gas derived from expired human breath existing in the passenger compartment 910, by subtracting the detection result Cr of the second gas sensor 520 from the detection result Cs of the first gas sensor 510. That is, even in a case in which concentration of carbon dioxide gas derived from the expired human breath changes in accordance with a change in a passenger load factor of the passenger compartment 910, this change is unlikely to produce an effect on Cs - Cr that is the difference between the detection result Cs of the first gas sensor 510 and the detection result Cr of the second gas sensor 520.

Thus, there is no necessity for changing the strictness of determination of whether leakage of the carbon dioxide refrigerant from the refrigeration cycle device 100 is occurring depending on a change in concentration of carbon dioxide gas derived from expired human breath. This enables easy detection of leakage of the carbon dioxide refrigerant.

### Embodiment 6

Although a determination of whether leakage of the carbon dioxide refrigerant is occurring is made based on Cs - Cr that is the difference between the detection result Cs of the first gas sensor 510 and the detection result Cr of the second gas sensor 520 in aforementioned Embodiment 5, the physical quantity used for the determination is not limited to the difference Cs - Cr.

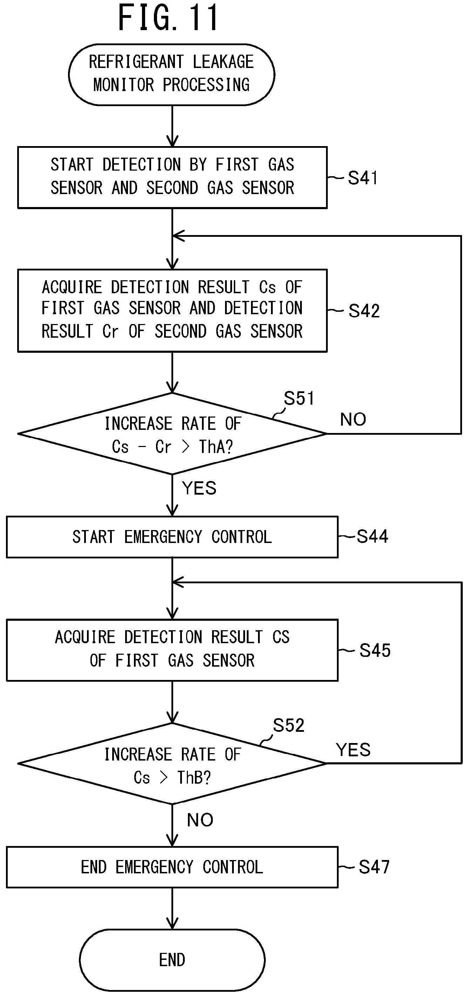

As illustrated in FIG. 11, in the present embodiment, after step S42 described above, the control device 600 determines, by comparing an increase rate of the difference Cs - Cr and a predetermined third threshold ThA, whether leakage of the carbon dioxide refrigerant from the refrigeration cycle device 100 is occurring (step S51).

The "increase rate of the difference Cs - Cr" indicates (i) a difference between a value of a current difference Cs - Cr and a value of a preceding difference Cs - Cr or (ii) a physical quantity that is proportional to the difference. The "value of a preceding difference Cs - Cr" means a value of the difference Cs - Cr at a time one sampling period beforehand.

In the case in which leakage of the carbon dioxide refrigerant from the refrigeration cycle device 100 is not occurring, since almost no temporal change occur in the value of the difference Cs - Cr, the increase rate of the difference Cs - Cr becomes zero or a value close to zero. Conversely, in the case of occurrence of leakage of the carbon dioxide refrigerant from the refrigeration cycle device 100, the increase rate of the difference Cs - Cr becomes a large value, since this rate represents severity of the leakage of the carbon dioxide refrigerant.

When the increase rate of the difference Cs - Cr is larger than or equal to the third threshold ThA indicating the occurrence of leakage of the carbon dioxide refrigerant from the refrigeration cycle device 100 (YES in step S51), the control device 600 proceeds to step S44.

Conversely, when the increase rate of the difference Cs - Cr is smaller than the third threshold ThA (NO in step S51), the control device 600 returns to step S42 due to the inability to say in this case that leakage of the carbon dioxide refrigerant from the refrigeration cycle device 100 is occurring.

Furthermore, in the present embodiment, after step S45 described above, the control device 600 determines, by comparison as to whether an increase rate of Cs is equal to or smaller than a predetermined fourth threshold ThB, whether the leakage of the of the carbon dioxide refrigerant is ended (step S52).

The "increase rate of Cs" indicates (i) a difference between a value of a current Cs and a value of a preceding Cs or (ii) a physical quantity that is proportional to the difference. The "value of a preceding Cs" means a value of Cs at a time one sampling period beforehand.

When the leakage of the carbon dioxide refrigerant is ending, the increase rate of a leakage amount of the carbon dioxide refrigerant indicates a negative value. Thus, the control device 600 proceeds to step S47 when the increase rate of Cs is equal to or smaller than the fourth threshold ThB that is a negative value indicating that leakage of the carbon dioxide refrigerant is ending (YES in step S52), or returns to step S45 when the gradient of Cs is larger than the fourth threshold ThB (NO in step S52). Other configuration and functional effects are similar to those of Embodiment 5.

### Embodiment 7

Although FIG. 9 illustrates an example of configuration in which the second gas sensor 520 is arranged in the indoor chamber 710, the second gas sensor 520 may be arranged in the passenger compartment 910.

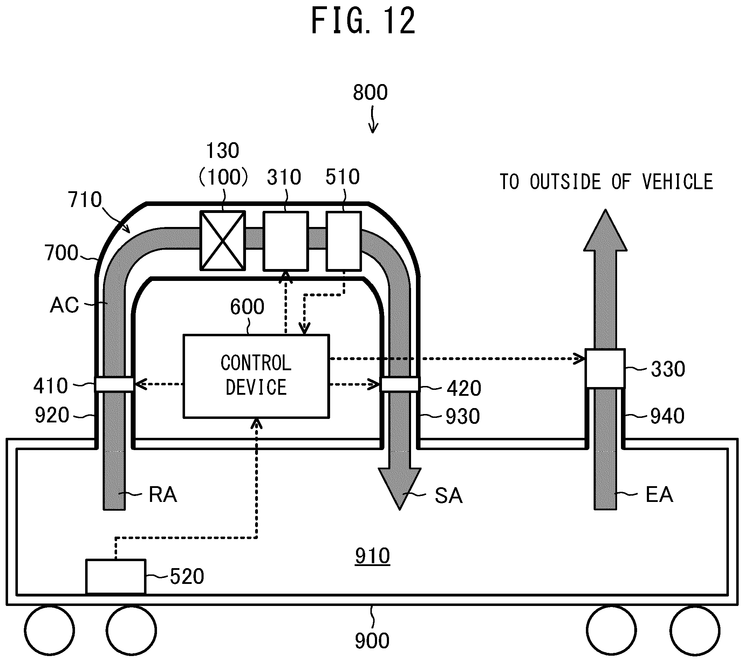

As illustrated in FIG. 12, in the present embodiment, the second gas sensor 520 is arranged inside the passenger compartment 910 at a location other than a location that is directly hit by the supply air SA. Since specific gravity of carbon dioxide gas is larger than specific gravity of air, the second gas sensor 520 may be arranged on the floor of the passenger compartment 910, at a lower part of a seat, or the like. Other configuration and functional effects are similar to those of Embodiment 5.

Although Embodiments 1-7 are described above, modifications as described below may be made.

Although FIGS. 3-5 relating to aforementioned Embodiments 1 and 2 illustrate the second windbreak plate 513b facing the first windbreak plate 513a, the second windbreak plate 513b may be omitted.

Although aforementioned Embodiment 5 describes making the determination of whether leakage of the carbon dioxide refrigerant is occurring based on the value of the difference Cs - Cr and aforementioned Embodiment 6 describes making the determination of whether leakage of the carbon dioxide refrigerant is occurring based on the increase rate of the difference Cs - Cr, the physical quantity used for the determination of whether leakage of the carbon dioxide refrigerant is occurring is not limited to the difference Cs - Cr and increase rate of the difference Cs - Cr. Any physical quantity dependent on the difference Cs - Cr is usable for the determination of whether leakage of the carbon dioxide refrigerant is occurring.

The railroad vehicle as used herein is not limited to a train but includes a bullet train, a monorail, and other vehicles that travel along a track. Further, the vehicle in which the casing 700 is installed is not limited to a railroad vehicle and may be a bus or other automobile-type vehicle.

The foregoing describes some example embodiments for explanatory purposes. Although the foregoing description has presented specific embodiments, persons skilled in the art will recognize that changes may be made in form and detail without departing from the scope of the invention as defined by the claims. Accordingly, the description and drawings are to be regarded in an illustrative rather than a restrictive sense. This detailed description, therefore, is not to be taken in a limiting sense, and the scope of the invention is defined only by the claims.

### Industrial Applicability

An air conditioning apparatus for a vehicle according to the present invention can be utilized for air conditioning of a vehicular compartment defined in a vehicle for human occupancy.

### Reference Signs List

- 100: Refrigeration cycle device
- 100a: First refrigeration cycle device
- 100b: Second refrigeration cycle device
- 110a: First compressor
- 110b: Second compressor
- 120a: First outdoor heat exchanger
- 120b: Second outdoor heat exchanger
- 130: Indoor heat exchanger
- 130a: First indoor heat exchanger
- 130b: Second indoor heat exchanger
- 140a: First accumulator
- 140b: Second accumulator
- 150a: First refrigerant piping
- 150b: Second refrigerant piping
- 200a: First heater
- 200b: Second heater
- 310: Indoor fan
- 310a: First indoor fan
- 310b: Second indoor fan
- 311: Air outlet
- 320: Outdoor fan
- 330: Exhaust fan
- 410: Return damper
- 420: Supply damper
- 431, 432: Fresh damper
- 510: First gas sensor
- 511: Sensing portion
- 512: Main body
- 513: Windbreak plate
- 513a: First windbreak plate
- 513b: Second windbreak plate
- 514: Protrusion portion
- 520: Second gas sensor
- 600: Control device
- 700: Casing
- 710: Indoor chamber
- 711: First return chamber
- 712: Second return chamber
- 713: Supply chamber
- 720: Outdoor chamber
- 730: Exhaust chamber
- 800: Air conditioning apparatus for railroad vehicle (Air conditioning apparatus for vehicle)
- 900: Railroad vehicle (Vehicle)
- 910: Passenger compartment (Vehicular compartment)
- 920: Return duct
- 930: Supply duct
- 940: Exhaust duct
- AC: Airflow
- EA: Exhaust air
- FA: Fresh air
- RA: Return air
- SA: Supply air

## Claims

1. An air conditioning apparatus (800) installed on a vehicle (900), the air conditioning apparatus (800) comprising:
a casing (700) installed on the vehicle (900) and defining an indoor chamber (710), the indoor chamber (710) communicating with a vehicular compartment (910) of the vehicle (900);
an indoor heat exchanger (130) arranged in the indoor chamber (710) and having an interior for flow therethrough of a refrigerant containing carbon dioxide;
a cooperation device (110a, 110b, 120a, 120b, 140a, 140b, 150a, 150b) included in, together with the indoor heat exchanger (130), a refrigeration cycle device (100) for circulation therethrough of the refrigerant; the cooperation device (110a, 110b, 120a, 120b, 140a, 140b, 150a, 150b) comprising a compressor (110a;110b), an outdoor heat exchanger (120a;120b), an expander, an accumulator (140a; 140b) and a refrigerant piping (150a; 150b);
an indoor fan (310) arranged in the indoor chamber (710) and configured to form airflow, the airflow being formed by air flowing from the vehicular compartment (910) into the indoor chamber (710), passing through the indoor heat exchanger (130), and flowing out to return to the vehicular compartment (910); and
a first gas sensor (510) to detect a concentration of carbon dioxide gas in a path of the airflow at a position located downstream of the indoor heat exchanger (130), wherein
the first gas sensor (510) includes:
a sensing portion (511) configured to react in accordance with the concentration of the carbon dioxide gas,
a main body (512) fixed to the casing;
a protrusion portion (514) that protrudes from the main body (512) in a vehicle width direction indicating a width direction of the vehicle (900), the sensing portion (511) is disposed at the protrusion portion (514), and
a windbreak plate (513) extending in the vehicle width direction and configured to prevent the airflow AC from directly hitting the sensing portion (511),
said vehicle width direction is an intersection direction intersecting the airflow AC.

2. The air conditioning apparatus (800) according to claim 1, wherein
the indoor fan (310) is arranged at a position located downstream of the indoor heat exchanger (130) with respect to a flow direction of the airflow,
the first gas sensor (510) is arranged at a position located downstream of the indoor fan (310) with respect to the flow direction of the airflow, and
the windbreak plate (513) is arranged between the sensing portion (511) and the indoor fan (310).

3. The air conditioning apparatus (800) according to claim 1 or 2, wherein
the indoor fan (310) has an air outlet (311) to discharge the air included in the airflow, and
the sensing portion (511) of the first gas sensor (510) is arranged below a central position of the air outlet (311) in a vertical direction.

4. The air conditioning apparatus (800) according to any one of claims 1 to 3, further comprising:
a control device (600) to determine, by using an increase rate of a detection result of the first gas sensor (510), whether leakage of the refrigerant from the refrigeration cycle device (100) is occurring.

5. The air conditioning apparatus (800) according to any one of claims 1 to 3, further comprising:
a second gas sensor (520) to detect a concentration of the carbon dioxide gas (i) in the path of the airflow at a position located upstream of the indoor heat exchanger (130) or (ii) in the vehicular compartment (910); and
a control device (600) to determine, by using a detection result of the first gas sensor (510) and a detection result of the second gas sensor (520), whether leakage of the refrigerant from the refrigeration cycle device (100) is occurring.

6. The air conditioning apparatus (800) according to claim 4 or 5, further comprising:
a return damper (410) that is switchable between (i) an open state in which inflow of the air forming the airflow from the vehicular compartment (910) into the indoor chamber (710) is allowed and (ii) a closed state in which the inflow is prevented;
a supply damper (420) that is switchable between (i) an open state in which outflow of the airflow from the indoor chamber (710) to the vehicular compartment (910) is allowed and (ii) a closed state in which the outflow is prevented; and
a fresh damper (431, 432) arranged in the indoor chamber (710) at a position through which the airflow passes, the fresh damper (431, 432) being switchable between (i) an open state in which inflow of outside air into the indoor chamber (710) from an exterior of the casing (700) and from an exterior of the vehicular compartment (910) is allowed and (ii) a closed state in which the inflow is prevented, wherein
the control device (600), when determining that the leakage of the refrigerant from the refrigeration cycle device (100) is occurring, causes stoppage of the compressor (110a, 110b), switches the return damper (410) to the closed state, and switches the supply damper (420) and the fresh damper (431, 432) to the open state.

7. The air conditioning apparatus (800) according to claim 4 or 5, further comprising:
a return damper (410) that is switchable between (i) an open state in which inflow of the air forming the airflow from the vehicular compartment (910) into the indoor chamber (710) is allowed and (ii) a closed state in which the inflow is prevented; and
a supply damper (420) that is switchable between (i) an open state in which outflow of the airflow from the indoor chamber (710) to the vehicular compartment (910) is allowed and (ii) a closed state in which the outflow is prevented, wherein
the control device (600), when determining that the leakage of the refrigerant from the refrigeration cycle device (100) is occurring, causes stoppage of the compressor (110a, 110b) and switches the return damper (410) and the supply damper (420) to the closed state.

## Patentansprüche

1. Klimaanlage (800), die in einem Fahrzeug (900) installiert ist, wobei die Klimaanlage (800) umfasst:
ein Gehäuse (700), das an dem Fahrzeug (900) installiert ist und eine Innenkammer (710) definiert, wobei die Innenkammer (710) mit einem Fahrzeugraum (910) des Fahrzeugs (900) kommuniziert;
einen Innenwärmetauscher (130), der in der Innenkammer (710) angeordnet ist und einen Innenraum zum Durchströmen mit einem kohlendioxidhaltigen Kältemittel aufweist;
eine Kooperationsvorrichtung (110a, 110b, 120a, 120b, 140a, 140b, 150a, 150b), die zusammen mit dem Innenwärmetauscher (130) in einer Kältekreislaufvorrichtung (100) zur Zirkulation dadurch des Kältemittels enthalten ist; wobei die Kooperationsvorrichtung (110a, 110b, 120a, 120b, 140a, 140b, 150a, 150b) einen Kompressor (110a; 110b), einen Außenwärmetauscher (120a; 120b), einen Expander, einen Akkumulator (140a; 140b) und eine Kältemittelrohrleitung (150a; 150b) umfasst;
ein Innengebläse (310), das in der Innenkammer (710) angeordnet und konfiguriert ist, um einen Luftstrom zu bilden, wobei der Luftstrom durch Luft gebildet wird, die von dem Fahrzeugraum (910) in die Innenkammer (710) strömt und durch den Innenfahrzeugraum (910) strömt; und
einen ersten Gassensor (510) zum Detektieren einer Konzentration von Kohlendioxidgas in einem Pfad des Luftstroms an einer Position, die sich stromabwärts des Innenwärmetauschers (130) befindet,
wobei
der erste Gassensor (510) beinhaltet:
einen Erfassungsabschnitt (511), der so konfiguriert ist, dass er in Abhängigkeit von der Konzentration des Kohlendioxidgases reagiert,
einen Hauptkörper (512), der am Gehäuse befestigt ist;
einen Vorsprungsabschnitt (514), der von dem Hauptkörper (512) in einer Fahrzeugbreitenrichtung vorspringt, die eine Breitenrichtung des Fahrzeugs (900) angibt, wobei der Erfassungsabschnitt (511) an dem Vorsprungsabschnitt (514) angeordnet ist, und
eine Windschutzplatte (513), die sich in der Fahrzeugbreitenrichtung erstreckt und so konfiguriert ist, dass sie verhindert, dass der Luftstrom AC direkt auf den Erfassungsabschnitt (511) trifft,
wobei die Fahrzeugbreitenrichtung eine Schnittrichtung ist, die den Luftstrom AC schneidet.

2. Klimaanlage (800) nach Anspruch 1, wobei
das Innengebläse (310) an einer Position angeordnet ist, die sich in Bezug auf eine Strömungsrichtung des Luftstroms stromabwärts des Innenwärmetauschers (130) befindet,
der erste Gassensor (510) an einer Position angeordnet ist, die sich in Bezug auf die Strömungsrichtung des Luftstroms stromabwärts des Innengebläses (310) befindet, und
die Windschutzplatte (513) zwischen dem Erfassungsabschnitt (511) und dem Innengebläse (310) angeordnet ist.

3. Klimaanlage (800) nach Anspruch 1 oder 2, wobei
das Innengebläse (310) einen Luftauslass (311) aufweist, um die in dem Luftstrom enthaltene Luft auszustoßen, und
der Erfassungsabschnitt (511) des ersten Gassensors (510) in einer vertikalen Richtung unterhalb einer zentralen Position des Luftauslasses (311) angeordnet ist.

4. Klimaanlage (800) nach einem der Ansprüche 1 bis 3, ferner umfassend:
eine Steuervorrichtung (600), um unter Verwendung einer Anstiegsrate eines Detektionsergebnisses des ersten Gassensors (510) zu bestimmen, ob eine Leckage des Kältemittels aus der Kältekreislaufvorrichtung (100) auftritt.

5. Klimaanlage (800) nach einem der Ansprüche 1 bis 3, ferner umfassend:
einen zweiten Gassensor (520) zum Detektieren einer Konzentration des Kohlendioxidgases (i) in dem Pfad des Luftstroms an einem (130) oder (ii) im Fahrzeugraum (910); und
eine Steuervorrichtung (600), um unter Verwendung eines Detektionsergebnisses des ersten Gassensors (510) und eines Detektionsergebnisses des zweiten Gassensors (520) zu bestimmen, ob eine Leckage des Kältemittels aus der Kältekreislaufvorrichtung (100) auftritt.

6. Klimaanlage (800) nach Anspruch 4 oder 5, ferner umfassend:
eine Rückschlagklappe (410), die zwischen (i) einem offenen Zustand, in dem das Einströmen der Luft, die den Luftstrom bildet, aus dem Fahrzeugraum (910), in die Innenkammer (710) ermöglicht wird, und (ii) einem geschlossenen Zustand, in dem das Einströmen verhindert wird, umschaltbar ist;
eine Zufuhrklappe (420), die zwischen (i) einem offenen Zustand, in dem ein Ausströmen des Luftstroms aus der Innenkammer (710) in den Fahrzeugraum (910) ermöglicht wird, und (ii) einem geschlossenen Zustand, in dem das Ausströmen verhindert wird, umschaltbar ist; und
eine Frischluftklappe (431, 432), die in der Innenkammer (710) an einer Position angeordnet ist, durch die der Luftstrom hindurchströmt, wobei die Frischluftklappe (431, 432) zwischen (i) einem offenen Zustand, in dem das Einströmen von Außenluft in die Innenkammer (710) von außerhalb des Raums (910) ermöglicht wird, und (ii) einem geschlossenen Zustand, in dem das Einströmen verhindert wird, umschaltbar ist, wobei
die Steuervorrichtung (600), wenn sie feststellt, dass die Leckage des Kältemittels aus der Kältekreislaufvorrichtung (100) auftritt, den Kompressor (110a, 110b) zum Stillstand bringt, die Rückschlagklappe (410) in den geschlossenen Zustand umschaltet und die Zufuhrklappe (420) und die Frischluftklappe (431, 432) in den offenen Zustand umschaltet.

7. Klimaanlage (800) nach Anspruch 4 oder 5, ferner umfassend:
eine Rückschlagklappe (410), die zwischen (i) einem offenen Zustand, in dem das Einströmen der Luft, die den Luftstrom bildet, aus dem Fahrzeugraum (910), in die Innenkammer (710) ermöglicht wird, und (ii) einem geschlossenen Zustand, in dem das Einströmen verhindert wird, umschaltbar ist; und
eine Zufuhrklappe (420), die zwischen (i) einem offenen Zustand, in dem ein Ausströmen des Luftstroms aus der Innenkammer (710) in den Fahrzeugraum (910) ermöglicht wird, und (ii) einem geschlossenen Zustand, in dem das Ausströmen verhindert wird, umschaltbar ist; wobei
die Steuervorrichtung (600), wenn sie feststellt, dass die Leckage des Kältemittels aus der Kältekreislaufvorrichtung (100) auftritt, den Stillstand des Kompressors (110a, 110b) bewirkt und die Rücklaufklappe (410) und die Versorgungsklappe (420) in den geschlossenen Zustand schaltet.

## Revendications

1. Appareil de climatisation (800) installé sur un véhicule (900), l'appareil de climatisation (800) comprenant :
un boîtier (700) installé sur le véhicule (900) et définissant une chambre intérieure (710), la chambre intérieure (710) communiquant avec un compartiment de véhicule (910) du véhicule (900) ;
un échangeur de chaleur intérieur (130) disposé dans la chambre intérieure (710) et ayant un intérieur à travers lequel s'écoule un fluide frigorigène contenant du dioxyde de carbone ;
un dispositif de coopération (110a, 110b, 120a, 120b, 140a, 140b, 150a, 150b) inclus, conjointement à l'échangeur de chaleur intérieur (130), dans un dispositif de cycle de réfrigération (100) pour la circulation du fluide frigorigène ; le dispositif de coopération (110a, 110b, 120a, 120b, 140a, 140b, 150a, 150b) comprenant un compresseur (110a ; 110b), un échangeur de chaleur extérieur (120a ; 120b), un détendeur, un accumulateur (140a ; 140b) et une tuyauterie de fluide frigorigène (150a ; 150b) ;
un ventilateur intérieur (310) disposé dans la chambre intérieure (710) et configuré pour former un flux d'air, le flux d'air étant formé par l'air s'écoulant du compartiment de véhicule (910) dans la chambre intérieure (710), en traversant le compartiment de véhicule intérieur (910) ; et
un premier capteur de gaz (510) pour détecter une concentration de dioxyde de carbone dans un trajet du flux d'air à une position située en aval de l'échangeur de chaleur intérieur (130),
dans lequel
le premier capteur de gaz (510) comprend :
une partie de détection (511) configurée pour réagir conformément à la concentration du dioxyde de carbone,
un corps principal (512) fixé au boîtier ;
une partie saillante (514) qui fait saillie du corps principal (512) dans une direction de largeur de véhicule indiquant une direction de largeur du véhicule (900), la partie de détection (511) est disposée au niveau de la partie saillante (514), et
une plaque brise-vent (513) s'étendant dans la direction de largeur de véhicule et étant configurée pour empêcher le flux d'air de climatisation de frapper directement la partie de détection (511),
ladite direction de largeur de véhicule est une direction d'intersection avec le flux d'air de climatisation.

2. Appareil de climatisation (800) selon la revendication 1, dans lequel
le ventilateur intérieur (310) est disposé à une position située en aval de l'échangeur de chaleur intérieur (130) par rapport à une direction du flux d'air,
le premier capteur de gaz (510) est disposé à une position située en aval du ventilateur intérieur (310) par rapport à la direction d'écoulement du flux d'air, et
la plaque brise-vent (513) est disposée entre la partie de détection (511) et le ventilateur intérieur (310).

3. Appareil de climatisation (800) selon la revendication 1 ou 2, dans lequel
le ventilateur intérieur (310) a une sortie d'air (311) pour évacuer l'air inclus dans le flux d'air, et
la partie de détection (511) du premier capteur de gaz (510) est disposée en dessous d'une position centrale de la sortie d'air (311) dans une direction verticale.

4. Appareil de climatisation (800) selon l'une quelconque des revendications 1 à 3, comprenant en outre :
un dispositif de commande (600) pour déterminer, en utilisant un taux d'augmentation d'un résultat de détection du premier capteur de gaz (510), si une fuite du fluide frigorigène se produit à partir du dispositif de cycle de réfrigération (100).

5. Appareil de climatisation (800) selon l'une quelconque des revendications 1 à 3, comprenant en outre :
un second capteur de gaz (520) pour détecter une concentration de dioxyde de carbone (i) sur le trajet du flux d'air en un point (130) ou (ii) dans le compartiment du véhicule (910) ; et
un dispositif de commande (600) pour déterminer, en utilisant un résultat de détection du premier capteur de gaz (510) et un résultat de détection du second capteur de gaz (520), si une fuite du fluide frigorigène se produit à partir du dispositif de cycle de réfrigération (100).

6. Appareil de climatisation (800) selon la revendication 4 ou 5, comprenant en outre :
un registre de retour (410) qui peut être commuté entre (i) un état ouvert dans lequel l'entrée de l'air formant le flux d'air du compartiment de véhicule (910) dans la chambre intérieure (710) est autorisée et (ii) un état fermé dans lequel l'entrée est empêchée ;
un registre d'alimentation (420) qui peut être commuté entre (i) un état ouvert dans lequel une sortie du flux d'air de la chambre intérieure (710) vers le compartiment de véhicule (910) est autorisé et (ii) un état fermé dans lequel la sortie est empêchée ; et
un registre d'air frais (431, 432) disposé dans la chambre intérieure (710) à une position à travers laquelle le flux d'air passe, le registre d'air frais (431, 432) pouvant être commuté entre (i) un état ouvert dans lequel l'entrée d'air extérieur dans la chambre intérieure (710) depuis l'extérieur du compartiment (910) est permise et (ii) un état fermé dans lequel l'entrée est empêchée, dans lequel
le dispositif de commande (600), lorsqu'il détermine que la fuite du fluide frigorigène se produit à partir du dispositif de cycle de réfrigération (100), provoque l'arrêt du compresseur (110a, 110b), commute le registre de retour (410) à l'état fermé, et commute le registre d'alimentation (420) et le registre d'air frais (431, 432) à l'état ouvert.

7. Appareil de climatisation (800) selon la revendication 4 ou 5, comprenant en outre :
un registre de retour (410) qui peut être commuté entre (i) un état ouvert dans lequel l'entrée de l'air formant le flux d'air du compartiment de véhicule (910) dans la chambre intérieure (710) est autorisée et (ii) un état fermé dans lequel l'entrée est empêchée ; et
un registre d'alimentation (420) qui peut être commuté entre (i) un état ouvert dans lequel une sortie du flux d'air de la chambre intérieure (710) vers le compartiment de véhicule (910) est autorisé et (ii) un état fermé dans lequel a sortie est empêchée, dans lequel
le dispositif de commande (600), lorsqu'il détermine que la fuite du fluide frigorigène se produit à partir du dispositif de cycle de réfrigération (100), provoque l'arrêt du compresseur (110a, 110b) et commute le registre de retour (410) et le registre d'alimentation (420) à l'état fermé.
